# EUROPÄISCHE PATENTSCHRIFT

(11) **EP 2 984 462 B1**
(45) Veröffentlichungstag und Bekanntmachung des Hinweises auf die Patenterteilung: **07.12.2016**
(21) Anmeldenummer: 14716522.9
(22) Anmeldetag: 08.04.2014
(51) Int. Cl.: G01G 7/04

(54) **WÄGEVORRICHTUNG**
WEIGHING EQUIPMENT
DISPOSITIF DE PESÉE

(30) Priorität: 11.04.2013 DE 102013103636
(43) Veröffentlichungstag der Anmeldung: 17.02.2016
(73) Patentinhaber: Sartorius Lab Instruments GmbH & Co. KG, 37079 Göttingen (DE)
(72) Erfinder: DUDDA, Olaf, 37081 Göttingen (DE); SPANNAGEL, Wilfried, 37081 Göttingen (DE); BRUCE, Mike, Wheat Ridge, CO 80033 (US); RAKESTRAW, Mike, Arvada Co. 80007 (US); WOLF, Steve, Arvada, CO 80004 (US)
(86) Internationale Anmeldenummer: PCT/EP2014/000939
(87) Internationale Veröffentlichungsnummer: WO 2014/166627

(56) Entgegenhaltungen:
- DE-A1- 3 518 110

## Beschreibung

### Gebiet der Erfindung

Die Erfindung betrifft eine Wägevorrichtung mit einer Lastaufnahme und einem einen Regler umfassenden Regelkreis, mittels dessen eine lastbedingte und mittels eines Positionssensors erfassbare Auslenkung eines mit der Lastaufnahme gekoppelten Übersetzungshebels durch eine Gegenkraft eines geregelt bestromten Elektromagneten kompensierbar ist, wobei der Elektromagnet zu derartigen Schwingungen seiner Magnetkraft anregbar ist, dass resultierende Auslenkungsänderungen des Übersetzungshebels eine Umverteilung einer auf der Lastaufnahme positionierten, rieselfähigen Probe bewirken.

### Stand der Technik

Derartige Wägevorrichtungen sind bekannt aus der DE 35 18 110 A1.

Eine typische Anwendung von Wägevorrichtungen, insbesondere von Laborwaagen, ist deren Anwendung als sogenannte Trocknungswaage. Ziel der Trocknungswägung ist die Ermittlung des Feuchtegehaltes einer pulver- oder (zunächst) breiförmigen Probe. Diese wird in einem offenen Gefäß auf den Lastaufnehmer der Wägevorrichtung aufgesetzt und es wird ein Startgewicht ermittelt. Anschließend wird die auf dem Lastaufnehmer positionierte Probe erhitzt, sodass die in der Probe enthaltene Feuchtigkeit verdampft. Das nach dem Verdampfen ermittelte Endgewicht kann mit dem zuvor ermittelten Startgewicht verglichen werden, sodass sich die interessierenden Werte, insbesondere der Feuchtegehalt der Probe ermitteln lassen. Um zuverlässig eine schnelle und vollständige Verdampfung der Feuchtigkeit zu erreichen, ist es günstig, die Probe auf der Lastaufnahme während des Trocknungsvorgangs gelegentlich umzuverteilen, gleichmäßig auf der Waagschale zu verteilen.

Die gattungsbildende DE 35 18 110 A1 schlägt hierzu vor, das elektromagnetische System einer gem. dem Prinzip der elektromagnetischen Kompensation arbeitenden Wägevorrichtung (EMK-Waage) als Rüttler zu verwenden. EMK-Waagen sind dem Fachmann seit langem bekannt. Solche Waagen weisen ein Hebelsystem auf, welches eine minimale Auslenkung der Lastaufnahme in eine mittels eines Positionssensors erfassbare Auslenkung eines Übersetzungshebels übersetzt. An dem Übersetzungshebel greift zudem eine elektromagnetische Tauchspulenanordnung an, die in einen Regelkreis eingebunden ist, welcher außer dem vorgenannten Positionssensor auch einen elektronischen Regler umfasst, welcher den Spulenstrom der Tauchspulenanordnung vorgibt. Ziel der Regelung ist es, die lastbedingte Auslenkung durch eine elektromagnetische Gegenkraft zu kompensieren, sodass das mechanische System in nicht-ausgelenkter Stellung gehalten werden kann und der erforderliche Strom in der Tauchspulenanordnung ein Maß für die auf die Lastaufnahme wirkende Gewichtskraft ist. Die genannte Druckschrift schlägt nun vor, den Regelkreis durch Aufmodulation eines alternierenden Fremdsignals - sei es auf das Signal des Positionssensors oder sei es auf das Steuersignal des Kompensationsstroms, d.h. sei es vor oder hinter dem Regler - aufzuheben und alternierende Auslenkungen des mechanischen Systems zu provozieren. Diese am Übersetzungshebel provozierten Auslenkungen setzen sich fort bis in die Lastaufnahme und die Probe, was bei geeigneter Frequenz- und Amplitudenwahl ein Rütteln der auf der Lastaufnahme positionierten Probe bewirkt. Hierdurch wird rieselfähiges Wägegut umverteilt. Insbesondere kann eine Gleichverteilung einer rieselfähigen Probe auf der Waagschale erreicht werden.

Nachteilig bei der bekannten Vorrichtung ist das Erfordernis eines zusätzlichen Funktionsgenerators zur Erzeugung des Fremdsignals.

### Aufgabenstellung

Es ist die Aufgabe der vorliegenden Erfindung, die Verwendung des elektromechanischen Systems einer EMK-Waage als Rüttler für das Wägegut ohne das Erfordernis eines zusätzlichen Funktionsgenerators zu ermöglichen.

### Darlegung der Erfindung

Diese Aufgabe wird in Verbindung mit den Merkmalen des Oberbegriffs von Anspruch 1 dadurch gelöst, dass der Regler wenigstens ein aktives Reglerelement aufweist, dem zur Abstimmung wenigstens eines Regelungsparameters wenigstens ein passives Abstimmelement zugeschaltet ist, wobei der Regler wenigstens ein als zusätzliches oder alternatives Abstimmelement zuschaltbares, passives Verstimmelement aufweist, durch dessen Zuschaltung der Regelkreis destabilisierbar ist.

Bevorzugte Ausführungsformen sind Gegenstand der abhängigen Ansprüche.

Anders als aus dem Stand der Technik bekannt, setzt die Erfindung nicht auf die Aufhebung des Regelkreises durch Zuschaltung eines Störsignals, sondern nimmt vielmehr eine Verstimmung des Regelkreises vor, sodass dieser nicht mehr zügig in einen stabilen Zustand einschwingt, sondern vielmehr mit großen Ausschlägen um die Stabilitätslage herum schwingt, was zu einer entsprechenden Schwingung des mechanischen Systems der Waage und somit zu Schwingungen der Lastaufnahme führt.

Zur Realisierung eines einerseits stabilen und andererseits schnell nachführenden Regelkreises bedarf es zunächst eines dem konkret zu lösenden Problem angemessenen theoretischen Modells. Dieses lässt sich dann unter Zuhilfenahme üblicher Regler, die aus einem oder mehreren proportionalen-, integrierenden und/oder differenzierenden, aktiven Reglerelementen bestehen, umsetzen. Die konkreten Regelungsparameter, die zur Umsetzung des Modells benötigt werden, d.h. insbesondere Proportionalitätsfaktoren von Proportional-Reglerelementen und die Zeitkonstanten für integrierende oder differenzierende Reglerelemente bedürfen im Einzelfall der Abstimmung, wobei dem aktiven Reglerelement, insbesondere einem Operationsverstärker, passive Abstimmelemente, wie insbesondere Widerstände, Kapazitäten und/oder Induktivitäten entsprechender Größe, zugeschaltet werden. Auch Dämpfungseigenschaften des Regelkreises lassen sich durch Zuordnung geeigneter Abstimmelemente einstellen. Die Erfindung sieht nun vor, für wenigstens ein aktives Reglerelement wenigstens ein zugehöriges Abstimmelement durch ein zusätzliches Verstimmelement austausch- oder ergänzbar zu gestalten. Beispielsweise kann ein Widerstand, der als Abstimmelement einem als Proportionalelement eines Reglers wirkenden Operationsverstärker zugeschaltet ist, durch einen Widerstand anderen Widerstandswertes ersetzt oder durch einen zusätzlichen Widerstand ergänzt werden. Es ist offensichtlich, dass diese geänderte Abstimmung zu einer Änderung des Regelkreisverhaltens führt. Insbesondere kann bei geeigneter Wahl des zusätzlichen Abstimmelementes, d.h. des Verstimmelementes, eine Destabilisierung des Regelkreises erzielt werden, die zu den gewünschten Schwingungen des mechanischen Systems führt.

Der Vorteil der Erfindung liegt darin, die gewünschten Schwingungen ohne Zuschaltung eines Fremdsignals, d.h. ohne die Notwendigkeit eines entsprechenden Funktionsgenerators, erzeugen zu können. Zudem wird durch die feste Vorgabe des oder der Verstimmelemente eine vollständige Reproduzierbarkeit der erzeugten Schwingung garantiert.

Wie bereits zuvor erwähnt, ist besonders bevorzugt vorgesehen, dass das aktive Reglerelement ein Operationsverstärker ist. Dies entspricht der üblichen Ausgestaltung von Reglern. Günstigerweise ist das aktive Reglerelement die P-Komponente. d.h. die Proportionalkomponente, eines P-, PD-, PI- oder PID-Reglers und das passive Verstimmelement ein Widerstand. Hierdurch kann eine übergroße Proportionalität der Stellgröße zur Regelabweichung eingestellt werden, die anstatt zur stabilen Einstellung der Stellgröße zu deren deutlichen Überschwingen führt, sobald der Verstimmwiderstand zu dem eigentlichen Abstimmwiderstand hinzugeschaltet wird oder diesen ersetzt.

Es hat sich als günstig erwiesen, als Regler einen PID-Regler zu verwenden, dessen D-Komponente, d.h. dessen differenzierende Komponente, zugleich mit der Zuschaltung des Verstimmwiderstandes deaktivierbar ist. Hintergrund dieser Ausführungsform ist, dass einerseits mit PID-Reglern sehr stabile, schnelle Regelkreise realisierbar sind, andererseits aber eine differenzierende Reglerkomponente den gewünschten, übermäßigen Schwingungen des mechanischen Systems entgegenwirkt. Entsprechend sieht diese Ausführungsform der Erfindung vor, während derjenigen Zeiten in denen ein stabiler Regelkreis erforderlich ist, einen kompletten PID-Regler vorzuhalten, während derjenigen Zeiten hingegen, zu denen ein Rüttler benötigt wird, die stabilisierende D-Komponente abzuschalten.

Der Begriff des "Zuschaltens" des Verstimmelementes umfasst, wie oben erläutert, sowohl das Ersetzen als auch das Ergänzen des jeweiligen Abstimmelementes, welches dem aktiven Reglerelement zur Erzeugung eines stabilen Regelkreises zugeschaltet ist. Selbstverständlich ist es auch möglich, für ein aktives Reglerelement mehrere Verstimmelemente vorzuhalten, die alternativ oder gemeinsam zugeschaltet werden, sodass je nach konkreter Zuschaltung unterschiedliche Schwingungsverhalten des mechanischen Systems erzeugt werden können. Die konkrete Zuschaltung kann durch Benutzerauswahl oder automatisiert, beispielsweise in Abhängigkeit von dem auf den Lastaufnehmer wirkenden aktuellen Gesamtgewicht gewählt werden.

Um Beschädigungen des mechanischen Systems zu verhindern, ist bei einer Weiterbildung der Erfindung vorgesehen, dass die Auslenkungsänderungen des Übersetzungshebels durch geeignete Anschlagelemente begrenzt sind.

Weitere Merkmale und Vorteile der Erfindung ergeben sich aus der nachfolgenden speziellen Beschreibung und den Zeichnungen.

### Kurzbeschreibung der Zeichnungen

Es zeigen:
- Figur 1:: eine schematisierte Schnittdarstellung einer erfindungsgemäßen Wägevorrichtung,
- Figur 2:: ein Ersatzschaltbild des Reglers der Wägevorrichtung von Figur 1.

### Ausführliche Beschreibung bevorzugter Ausführungsformen

Gleiche Bezugszeichen in den Figuren deuten auf gleiche oder analoge Bauteile hin.

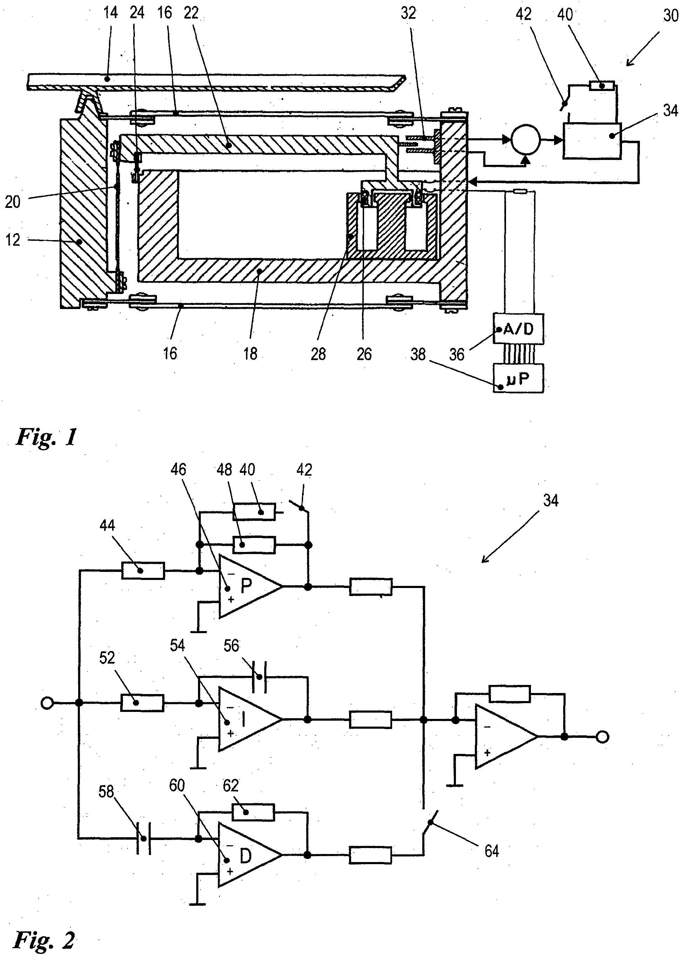

Figur 1 zeigt eine schematisierte Schnittdarstellung einer erfindungsgemäßen Wägevorrichtung (EMK-Waage) 10. Diese weist eine Lastaufnahme 12 auf, auf der eine Waagschale 14 zur Aufnahme des Wägegutes angeordnet ist. Die Lastaufnahme 12 ist mittels eines Parallellenkersystems 16 mit einer Basis 18 gekoppelt und vermag relativ zu dieser geringe senkrechte Auslenkungen zu vollführen. Auslenkungen der Lastaufnahme 12 werden über ein Koppelband 20 in einen Übersetzungshebel 22 eingeleitet, der über ein Hebelstützgelenk 24 mit der Basis gekoppelt und von dem Hebelstützgelenk 24 in einen mit dem Koppelband 20 verbundenen, kurzen Hebelarm und einen langen Hebelarm unterteil wird. Der lange Hebelarm ist an seinem freien Ende mit einer elektromagnetischen Kompensationsanordnung verbunden, die eine elektromagnetische Spule 26 umfasst, welche in den Luftspalt eines Permanentmagneten 28 eintaucht. Die Bestromung der Spule 26 wird über einen Regelkreis 30 geregelt. Dieser umfasst einen vorzugsweise optischen Positionssensor 32 zur Erfassung von Auslenkungen des langen Hebelarms des Übersetzungshebels 22. Dieses Signal wird als Regelabweichung einem Regler 34 zugeführt, der entsprechend der Abstimmung seiner Reglerkomponenten einen entsprechenden Spulenstrom als Stellgröße generiert, sodass am Übersetzungshebel 22 eine dessen Auslenkung kompensierende elektromagnetische Kraft angreift. Auf diese Weise wird jede lastbedingte Auslenkung der Lastaufnahme 12 durch die elektromagnetische Kraft der Kompensationseinrichtung kompensiert. Der hierfür erforderliche Spulenstrom, der über einen Analog/Digital-Wandler 36 digitalisiert und einem Prozessor 38 zugeführt wird, ist entsprechend ein Maß für die auslenkende Kraft, d.h. für das Gewicht der auf der Waagschale 14 positionierten Probe.

In Figur 1 bezeichnet das Bezugszeichen 34 schematisch den abgestimmten Regler, d.h. den Regler, dessen aktive Reglerelemente mittels passiver Abstimmelemente so eingerichtet sind, dass ein stabiler Regelkreis resultiert. Diesem abgestimmten Regler 34 ist erfindungsgemäß ein Verstimmelement (Verstimmwiderstand) 40 mittels eines Verstimmschalters 42 zuschaltbar. Hierdurch wird die Abstimmung des Reglers 34 derart verändert, d.h. der Regler 34 wird derart verstimmt, dass statt einer stabilen Auslenkungskompensation eine periodische Auslenkung des langen Hebelarms des Übersetzungshebels 22 resultiert, die über das mechanische System in eine entsprechende Schwingung der Lastaufnahme 12 und dadurch in ein Rütteln der auf der Waagschale 14 positionierten Probe übersetzt wird. Handelt es sich bei der Probe um rieselfähiges Material, führt das Rütteln zu einer Gleichverteilung der Probe auf der Waagschale 14.

Ein Ersatzschaltbild einer bevorzugten Ausführungsform des Reglers 34 mit Verstimmelement 40 ist in Figur 2 dargestellt. Der Regler 34 entspricht im Wesentlichen einem herkömmlichen PID-Regler mit einem Proportionalanteil, umfassend einen Vorwiderstand 44 und einen Operationsverstärker 46 mit zwischen dessen Ausgang und invertierendem Eingang geschaltetem Abstimmelement (Abstimmwiderstand) 48, dessen Widerstandswert im Wesentlichen den Proportionalitätsfaktor der Regelung vorgibt. Zusätzlich zum Abstimmwiderstand 48 ist der Verstimmwiderstand 40 vorgesehen, der mittels des Verstimmschalters 42 parallel zum Abstimmwiderstand 48 zugeschaltet werden kann. Hierdurch verändert sich der Gesamtwiderstandswert, was zu einer Erhöhung des Proportionalitätsfaktors der Regelung führt. Hinreichende Erhöhung des Proportionalitätsfaktors destabilisiert den Regelkreis 30, sodass das gewünschte Rütteln der Probe erfolgt.

Weiter umfasst der als PID-Regler ausgebildete Regler 34 eine integrierende Komponente mit einem Vorwiderstand 52 und einem Operationsverstärker 54, zwischen dessen Ausgang und invertierendem Eingang eine Abstimmkapazität 56 geschaltet ist, die zusammen mit dem Vorwiderstand 52 im Wesentlichen die Länge des Integrationsintervalls bestimmt. Obgleich in Figur 2 nicht dargestellt, könnte auch hier eine Zuschaltung von Verstimmelementen vorgesehen sein.

Schließlich umfasst der als PID-Regler ausgebildete Regler 34 gem. Figur 2 eine differenzierende Komponente mit einer vorgeschalteten Kapazität 58 und einem Operationsverstärker 60, zwischen dessen Ausgang und invertierendem Eingang ein Widerstand 62 geschaltet ist, der gemeinsam mit der vorgeschalteten Kapazität 58 die Länge des Differenzierungsintervalls bestimmt. Obgleich in Figur 2 nicht dargestellt, ist es denkbar, auch hier eine Zuschaltung von Verstimmelementen vorzusehen. Allerdings wirkt die differenzierende Komponente einer Destabilisierung aufgrund einer Verstimmung der Proportionalkomponente entgegen. Im Hinblick auf die Erzielung einer stabilen Regelung im Normalbetrieb der Wägevorrichtung ist es daher günstig, einen Regler 34 mit differenzierender Komponente zu verwenden. Bei der besonderen Betriebsart des Rüttelns hingegen ist der stabilisierende Einfluss der differenzierenden Komponente unerwünscht. Daher ist bei der bevorzugten Ausführungsform gem. Figur 2 vorgesehen, die differenzierende Komponente mittels des Deaktivierungsschalters 64 deaktivierbar zu gestalten. Das Schaltverhalten des Deaktivierungsschalters 64 ist dabei umgekehrt zum Schaltverhalten des Verstimmschalters 42 gestaltet, d.h. wenn der Verstimmwiderstand 40 zugeschaltet wird, wird die differenzierende Komponente des Reglers 34 deaktiviert und umgekehrt.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben. Insbesondere ist zu beachten, dass die Schaltung von Figur 2 rein symbolisch zu verstehen ist, wobei der Fachmann verschiedenste hardware-technische Optionen zur Umsetzung im konkreten Fall kennt. Ein bevorzugter Einsatz der erfindungsgemäßen Wägevorrichtung ist derjenige als Trocknungswaage.

### Bezugszeichenliste

- 10: Wägevorrichtung / EMK-Waage
- 12: Lastaufnahme
- 14: Waagschale
- 16: Parallellenkersystem
- 18: Basis
- 20: Koppelband
- 22: Übersetzungshebel
- 24: Hebelstützgelenk
- 26: Spule
- 28: Permanentmagnet
- 30: Regelkreis
- 32: Positionssensor
- 34: Regler
- 36: Analog-/Digital-Wandler
- 38: Prozessor
- 40: Verstimmelement / Verstimmwiderstand
- 42: Verstimmschalter
- 44: Vorwiderstand
- 46: Operationsverstärker
- 48: Abstimmelement / Abstimmwiderstand
- 52: Vorwiderstand
- 54: aktives Reglerelement / Operationsverstärker
- 56: Abstimmkapazität
- 58: vorgeschaltete Kapazität
- 60: Operationsverstärker
- 62: Widerstand
- 64: Deaktivierungsschalter

## Patentansprüche

1. Wägevorrichtung mit einer Lastaufnahme (12) und einem einen Regler (34) umfassenden Regelkreis (30), mittels dessen eine lastbedingte und mittels eines Positionssensors (32) erfassbare Auslenkung eines mit der Lastaufnahme (12) gekoppelten Übersetzungshebels (22) durch eine Gegenkraft eines geregelt bestromten Elektromagneten (26, 28) kompensierbar ist, wobei der Elektromagnet (26, 28) zu derartigen Schwingungen seiner Magnetkraft anregbar ist, dass resultierende Auslenkungsänderungen des Übersetzungshebels (22) eine Umverteilung einer auf der Lastaufnahme (12) positionierten, rieselfähigen Probe bewirken,
**dadurch gekennzeichnet,**
**dass** der Regler (34) wenigstens ein aktives Reglerelement (46) aufweist, dem zur Abstimmung wenigstens eines Regelungsparameters wenigstens ein passives Abstimmelement (48) zugeschaltet ist,
wobei der Regler (34) wenigstens ein als zusätzliches oder alternatives Abstimmelement zuschaltbares, passives Verstimmelement (40) aufweist, durch dessen Zuschaltung der Regelkreis (30) destabilisierbar ist.

2. Wägevorrichtung nach Anspruch 1,
**dadurch gekennzeichnet,**
**dass** das aktive Reglerelement (46) ein Operationsverstärker ist.

3. Wägevorrichtung nach einem der vorangehenden Ansprüche,
**dadurch gekennzeichnet,**
**dass** das aktive Reglerelement (46) eine P-Komponente eines P-, PD-, PI- oder PID-Reglers und das passive Verstimmelement (40) ein Widerstand ist.

4. Wägevorrichtung nach Anspruch 3,
**dadurch gekennzeichnet,**
**dass** der Regler (34) als PID-Regler ausgebildet ist, dessen D-Komponente zugleich mit der Zuschaltung des Verstimmwiderstandes (40) deaktivierbar ist.

5. Wägevorrichtung nach einem der vorangehenden Ansprüche,
**dadurch gekennzeichnet,**
**dass** die Auslenkungsänderungen des Übersetzungshebels (22) durch Anschlagelemente begrenzt sind.

## Claims

1. Weighing device with a load pick-up (12) and a regulating circuit (30), which comprises a regulator (34) and by means of which compensation can be provided for a load-induced deflection, which is detectable by means of a position sensor (32), of a translation lever (22) coupled with the load pick-up (12) can be provided by an opposing force of an electromagnet (26, 28) subject to regulated current flow, wherein the electromagnet (26, 28) is excitable to provide oscillations of its magnetic force of such a kind that resulting changes in deflection of the translation lever (22) cause redistribution of a pourable sample positioned on the load pick-up (12),
**characterised in that**
the regulator (34) comprises at least one active regulator element (46) with which at least one passive tuning element (48) for tuning at least one regulation parameter is connected, wherein the regulator (34) comprises at least one passive detuning element (40) which is connectible as an additional or alternative tuning element and by the connection of which the regulating circuit (30) can be destabilised.

2. Weighing device according to claim 1, **characterised in that** the active regulator element (46) is an operational amplifier.

3. Weighing device according to one of the preceding claims, **characterised in that** the active regulator element (46) is a P component of a P, PD, PI or PID regulator and the passive detuning element (40) is a resistance.

4. Weighing device according to claim 3, **characterised in that** the regulator (34) is constructed as a PID regulator, the D component of which is deactivatable at the same time as the connection of the detuning resistance (40).

5. Weighing device according to any one of the preceding claims, **characterised in that** the changes in deflection of the translation lever (22) are limited by abutment elements.

## Revendications

1. Dispositif de pesée comprenant un porte-charge (12) et un circuit d'asservissement (30) pourvu d'un régulateur (34), au moyen duquel une déviation d'un levier de transmission (22) accouplé au porte-charge (12), due à la charge et détectable par un capteur de position (32), peut être compensée par une force antagoniste d'un électro-aimant (26, 28) alimenté en courant de manière régulée, ledit électro-aimant (26, 28) étant excitable de manière que les oscillations de sa force magnétique soient telles que les variations de déviation du levier de transmission (22) entraînent une redistribution d'un échantillon apte à s'écouler placé sur le porte-charge (12),
**caractérisé**
**en ce que** le régulateur (34) comprend au moins un élément de régulation actif (46), auquel est connectable au moins un élément d'accordement passif (48) pour l'ajustement d'au moins un paramètre de régulation,
le régulateur (34) comportant au moins un élément de désaccordement passif (40) connectable comme élément d'accordement complémentaire ou alternatif, dont la connexion permet de déstabiliser le circuit d'asservissement (30).

2. Dispositif de pesée selon la revendication 1,
**caractérisé**
**en ce que** l'élément de régulation actif (46) est un amplificateur opérationnel.

3. Dispositif de pesée selon l'une des revendications précédentes,
**caractérisé**
**en ce que** l'élément de régulation actif (46) est une composante P d'un régulateur P, PD, PI ou PID, et en ce que l'élément de désaccordement passif (40) est une résistance.

4. Dispositif de pesée selon la revendication 3,
**caractérisé**
**en ce que** le régulateur (34) est réalisé comme régulateur PID, dont la composante D est désactivable simultanément à la connexion de la résistance de désaccordement (40).

5. Dispositif de pesée selon l'une des revendications précédentes,
**caractérisé**
**en ce que** les variations de déviation du levier de transmission (22) sont limitées par des éléments de butée.
